(19) Europäisches Patentamt
European Patent Office
Office européen des brevets

(11) Publication number: **0 118 479**
**B1**

(12) **EUROPEAN PATENT SPECIFICATION**

(45) Date of publication of patent specification: **21.10.87**

(51) Int. Cl.[4]: **B 01 D 53/34,** C 01 C 1/242

(21) Application number: **83902689.5**

(22) Date of filing: **25.08.83**

(86) International application number: **PCT/BR83/00007**

(87) International publication number: **WO 84/00903 15.03.84 Gazette 84/07**

# (54) PROCESS TO ELIMINATE AIR POLLUTANTS WHICH RESULT FROM THE COMBUSTION OF FUELS CONTAINING SULPHUR.

(30) Priority: **26.08.82 BR 8205030**
**16.08.83 BR 8304413**

(43) Date of publication of application:
**19.09.84 Bulletin 84/38**

(45) Publication of the grant of the patent:
**21.10.87 Bulletin 87/43**

(84) Designated Contracting States:
**AT BE DE FR GB NL SE**

(56) References cited:
**EP-A-0 034 563**
**FR-A-1 388 690**
**FR-A-2 364 682**
**FR-A-2 382 263**
**GB-A-1 104 583**
**GB-A-2 004 259**
**US-A-3 928 536**
**US-A-4 064 219**

**Chemical Abstracts, vol. 95, no. 12, September 1981 (Columbus, Ohio, US), see page 279, abstract no. 102276y, U. Mohn: "Process for removing sulfur oxides from gases with direct production of a usable finished reaction product", Report 1979, BMFT-FB-T-79-90(Ger)**

(73) Proprietor: **K, L + M Industria e Comercio S/A**
**Av. Senador Ermirio de Morais, 845**
**Sao Paulo - SP (BR)**

(72) Inventor: **Ladeira, Newton Conçalves**
**Av. Angélica 2635, ap. 82**
**Sao Paulo SP (BR)**
Inventor: **De Oliveira, Paulo Robert Medeiros**
**Estrada de Nazareh Paulista, Nr.26**
**07000 Cumbica-guarulhos-SP (BR)**
Inventor: **Marante, Adilson Pinto**
**Av.Pinheiros, Nr.4, Parque Petropolis**
**07600 Mairipora SP (BR)**
Inventor: **Krepel, Pedro Andrea**
**R. Bangu no 31**
**Sao Paulo SP (BR)**

(74) Representative: **Hagemann, Heinrich, Dr. et al**
**Patentanwälte GEYER, HAGEMANN & KEHL**
**Postfach 860329**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 118 479 B1**

**Description**

The present invention refers to a process aimed at the elimination of air pollution caused by the burning of sulphur containing fuels in all kinds of industry and equipment of all sizes. The process requires less investment than other alternative processes and produces a commercial end-product.

One of today's main concerns has been to eliminate air polluting agents resulting from the burning of sulphur containing fuels, without generating inadequate by-products. Many of the processes presently used require large investments in equipments and installations, normally without return or with high operational costs. The EP—A—0 034 563 points out the possibility of injecting ammonia under pressure into sulphur bearing gases. From this application it cannot be derived, that it is e.g. necessary to cool the combustion gases to a temperature lower than 65°C after having injected ammonia in the temperature range of 250 to 600°C into the combustion gases, which is essential for the invention discussed below. This special feature can also not be derived from the FR—B—2,382,263. This patent discloses injecting an ammonium ions containing solution into the combustion gas in a first step, cooling of the gas below the dew point, now injecting ammonia into the resulting mixture and precipitating the ammonium salts produced. The essential problems discussed above cannot be solved or minimazed satisfying.

Accordingly it is an object of the invention to provide a process for removing $SO_3$ and $SO_2$ from combustion gases resulting from the combustion of sulphur-containing fuels, which solves or minimizes the above problems, which is basically simple, easily retrofitted into the pollution equipments, with low investment costs and which process produces a high value end-product. It is a special problem of this invention to transform all sulphur dioxide ($SO_2$) and sulphur trioxide ($SO_3$) existing in the combustion gases into ammonium sulphate and preventing corrosion which is caused in the prior art due to the formation of liquid sulphuric acid ($H_2SO_4$) when $SO_3$ and water of combustion ($H_2O$) combine at temperatures below the sulphuric acid dew point. This is obtained according to the invention through the reaction of $SO_3$ and $SO_2$ with ammonia, preferably in gaseous state, which is injected directly into the combustion gases. The collected stable end-product is ammonium sulphate ($(NH_4)_2SO_4$) which is separated from the flue gases.

The above and other objectives of the invention are obtained by a process for removing $SO_3$ and $SO_2$ from combustion gases resulting from the combustion of sulphure-containing fuels, which comprises the following steps:

a) injecting ammonia into the combustion gases, the combustion gases having a temperature from 250°C to 600°C, preferably up to 400°C, the quantity of ammonia being sufficient to transform all the existing $SO_3$ and $SO_2$ into ammonium sulphate;

b) cooling the resulting mixture to a temperature lower than 65°C to complete the reaction of $SO_2$ with ammonia in the presence of water vapor and oxygen thereby directly producing ammonium sulphate;

c) passing the resulting mixture to a separation system for the removal and collection of submicron to low value micra ammonium sulphate particulates;

d) releasing the desulphurized combustion gases to the atmosphere.

Considering the possibility of providing more than one injection point of ammonia ($NH_3$), this process of the invention comprises the following steps:

I) injecting ammonia into the combustion gases, the combustion gases having a temperature from 250°C to 600°C, preferably from 300°C to 400°C, the quantity of ammonia being sufficient to transform all the existing $SO_3$ into ammonium sulphate;

II) cooling the resulting mixture to a temperature from 65°C to 250°C and injecting additional ammonia in a quantity sufficient to transform all existing $SO_2$ into ammonium sulphate;

III) cooling the resulting mixture to a temperature lower than 65°C to complete the reaction of $SO_2$ with ammonia in the presence of water vapor and oxygen thereby directly producing ammonium sulphate;

IV) passing the resulting mixture to a separation system for the removal and collection of submicron to low value micra ammonium sulphate particulates;

V) releasing the desulphurized combustion gases to the atmosphere.

In this case, the first injection is directed mainly to the neutralization of the $SO_3$.

According to a preferred embodiment of the invention the cooling in step (b) or of step (III) is effected by spraying a solution of ammonium sulphate into the mixture. Further it is preferred that the separation system includes absorbers with water, the resulting ammonium sulphate solution being separated, and that the ammonia is injected in the gaseous state, more preferably by means of perforated tubes installed transversally to the gas stream.

In case of injection of all the ammonia ($NH_3$) in the 250°C to 600°C combustion gases temperature range, the $NH_3$ will react with all present $SO_3$ and the rest of $NH_3$ will intermix with the combustion gases stream, up to the point where the temperature permits the occurrence of an irreversible reaction between the $SO_2$ and $NH_3$.

As already established technically, the $SO_3$ is a gas formed during the combustion of sulphur containing fuels, by the reaction of gaseous $SO_2$ with molecular oxygen ($O_2$), by the reaction of $SO_2$ in the flame with atomic oxygen and by catalytic oxidation of $SO_2$ in the heat transfer surfaces under high temperatures. The corresponding reactions are the following:

$$S+O_2 \rightarrow SO_2$$

$$2\ SO_2+O_2 \rightarrow 2\ SO_3$$

$$S+_3O \rightarrow SO_3$$

Without the presence of catalysers, the burning of sulphur containing fuels results in up to 5% $SO_3$ in the total of $SO_x$ compounds. In spite of the fact that gaseous ammonia reacts with $SO_3$ in the temperature range of 250°C to about 600°C, it has been verified that the ideal temperature range is 300°C to 400°C. In this range, the reaction of $SO_3$ with $NH_3$ is instantaneous resulting in $(NH_4)_2SO_4$ (ammonia sulphate) and eliminating the possibility of corrosion in the surfaces which would have been contacted by the $SO_3$. This corrosion occurs due to the formation of liquid sulphuric acid ($H_2SO_4$) when $SO_3$ and water of combustion ($H_2O$) combine at temperatures below the sulphuric acid dew point. The quantity of injected $NH_3$ is sufficient to insure the formation of $(NH_4)_2SO_4$ (ammonium sulphate).

Smaller quantities of $NH_3$ would result in the formation of hydrogen ammonium sulphate ($NH_4HSO_4$), which is a corrosive compound. The corresponding reactions are the following:

$$2\ NH_3+H_2O+SO_3 \rightarrow (NH_4)_2SO_4$$

$$NH_3+H_2O+SO_3 \rightarrow NH_4HSO_4$$

The minimum calculated quantity of $NH_3$ to avoid formation of $NH_4HSO_4$ in 3% sulphur bearing fuel oils, for example, is 0,08% of the oil weight. For higher levels of sulphur, the percentage will correspondingly higher (up to 9%). The reaction product $(NH_4)_2SO_4$ is stable and is carried together with the combustion gases' stream. As previously mentioned, this process is directed towards a complete and reliable elimination of the $SO_2$ resulting from the combustion of liquid, solid or gaseous fuels.

To neutralize the $SO_2$, the gaseous $NH_3$ is injected in one or more locations of the equipment, where the combustion gases are at a range of 65°C to 600°C. If the gaseous $NH_3$ is totally injected in a 200°C to 600°C region, the excess portion which does not participate in the reaction with $SO_3$, is carried in the combustion gases' stream, forming an intimate mixture which will react when the right temperature range is reached.

At 120°C the quantities of $SO_2$ which react with $NH_3$ increases, and as the temperature of the gases decreases, to about 108°C, an equilibrium situation is reached with 35% to 40% of the existing $SO_2$ having reacted with $NH_3$ according to the following reversible reactions:

$$NH_3+H_2O+SO_2 \rightleftarrows (NH_4)HSO_3 \text{ ammonium hydrogen sulphite}$$

$$(NH_4)HSO_3+NH_3 \rightleftarrows (NH_4)_2SO_3 \text{ ammonium sulphite}$$

$$(NH_4)_2SO_3 \rightleftarrows 2NH_3+H_2O+SO_2$$

It has been experimentally verified that this equilibrium situation is maintained until temperatures in the range of 65°C are attained.

Between 65°C and 48°C it has been experimentally proven that this reaction is stable with the simultaneous oxidation of ammonium sulphite to ammonium sulphate according to the following reactions:

$$2\ NH_3+H_2O+SO_2 \rightarrow (NH_4)_2SO_3$$

$$2\ (NH_4)_2SO_3+O_2 \rightarrow 2(NH_4)_2SO_4$$

This oxidation is processed by existing combustion air in excess or by an extra air entrainment into the gases, just before the separation system. The $(NH_4)_2SO_4$ (ammonium sulphate) is a stable, solid, submicron to a low vapour micra sized, product.

The above mentioned facts lead to verified results, if the combustion gases are released at higher temperatures than 65°C, part of the $SO_2$ (even if already reacted) might be released to the atmosphere, due to the reversible nature of the reactions at that higher range.

The separation of the stable end-product $(NH_4)_2SO_4$ (ammonium sulphate) from the combustion gases' stream, can be accomplished by dry methods such as electrostatic precipitators or other kinds of filters, or more economically by wet processes such as water absorbers.

The absorption of $(NH_4)_2SO_4$ (ammonium sulphate) in water is possible due to the highly soluble nature of this product.

The process will now be briefly outlined so as to show an example of a feasible and tested lay-out of the desulphurization of combustion gases with ammonia.

Figure 1 represents a flow diagram of the main components of an installation comprising the

equipment where the sulphur bearing fuel is burned, two distinct ammonia injection points, the $(NH_4)_2SO_4$ wet absorption system, an entrained water separator, the desulphurized flue gases released to atmosphere and the concentrated ammonium sulphate solution collection system.

Figure 2 illustrates one of the several assemblies of the ammonia injection elements, in adequate locations of the combustion gases' stream.

Figure 3 shows a typical configuration of the $NH_3$ injection tubes.

As shown in Figure 1, this process is applied in industrial installations such as boilers, furnaces, ovens, dryers, etc. (1), burning sulphur bearing fuels. Heat recovery equipment (2) may or not be present. In the present process, $NH_3$ coming from a storage tank (3) is distributed in gaseous or liquid form. If as a liquid, $NH_3$ is vaporised or not and injected initially in a region where the gases are preferably between 250°C and 600°C and before the heat recovery equipment. The quantity of the first injection 1.1 is, as previously explained, adequate to insure complete reaction with the $SO_3$, therefore eliminating corrosion problems in the heat recovery or other metallic or non metallic components of the existing installation. This permits the use of cheaper construction materials or results in longer life of the existing ones.

The combustion gases which leave the heat recovery equipment (2) in the example shown, are conducted by means of a duct (5) and ventilator (4) to a point where a second injection 2.1 of gaseous $NH_3$ is undertaken at lower temperature levels. Even if the gaseous $NH_3$ is injected at only one location, the quantity will always be such as to react initially with the existing $SO_3$ and further on at lower temperatures with the $SO_2$.

The combustion gases, after the last $NH_3$ injection, are sent along the duct (5) and into an appropriately dimensioned duct (6). This duct (6) has a battery of atomizing nozzles (6a) in adequate number and sizing.

These nozzles spray a recirculating solution of ammonium sulphate into the combustion gases. This solution is recirculated under pressure by a pump and piping (7).

A water make-up system (7a) is hooked up into this recirculating system. This pre-washing phase insures initial absorption of the existing $(NH_4)_2SO_4$ particles and a severe temperature drop of the combustion gases. Depending on the inlet temperature of the gases to this pre-washer/absorber, the completion of the $SO_2$ reaction to $(NH_4)_2SO_4$, may also happen in this region.

In the second stage of the $(NH_4)_2SO_4$ (ammonium sulphate) absorption in water, the combustion gases pass through a high pressure injector (8a) (or additional nozzles) spraying $(NH_4)_2SO_4$ solution into the gaseous stream, which is assembled on top of a solution collection tank (8). At this phase the simultaneous retention of the soluble ammonium sulphate particles and of the insoluble particles such as carbon, inorganic materials, etc, is achieved.

The concentrated solution of ammonium sulphate may be continuously or periodically taken away from the collection tank (8) into a storage tank (9).

This volume is substituted by make-up water.

One of the advantages of this wet separation process is that the insoluble and undesirable particles can be easily separated from the dissolved ammonium sulphate solution by conventional filters or gravity settling.

The system has also foreseen, for the cases where water entrained as mist should not be lost, the installation of a low pressure drop demister (10) which recovers part of the water which is returned to the solution tank (8) by piping (11).

The combustion gases leave the solution tank (8) totally desulphurized or, if desired, within the $SO_2$ emission levels specified by the local environmental control agency. The emission level is easily adjusted by the variation of the ammonia flow to be injected, with the use of proportioning or manual valves and flowmeters.

The complete system can also receive a pH controller of the tank (8) solution to insure continuous neutralization of the $SO_2$.

Direct or indirect measurement systems of the ammonium sulphate concentration in the solution contained in the tank (8) can also be added.

The duct (5) which receives the combustion gases, can also remain connected to the existing chimney (12) through a normally closed gate valve which functions as a by-pass to the separation system.

As shown in Figures 2 and 3, the ammonia gas injection is made in the gas ducts through perforated tubes (20), the number and disposition of the tubes being determined by the calculated ammonia gas flow, and by the objective of obtaining complete intermixing with the combustion gases.

The tubes are preferentially built out of mild steel and completely cross the combustion gas ducts, each tube being divided in three equal parts, with different number and sizes of holes (21), as better detailed in Figure 3. The first part has two series of holes (21) with a diameter d and a spacing of x. The second part has two lines of $d_1$ diameter holes, where $d_1$ is larger than d and spaced in an interval $x_1$, smaller than x. Likewise the third part has $d_2$ diameter holes ($d_2$ larger than $d_1$) spaced at $x_2$ intervals smaller than $x_1$.

The usual installation requires two parallel tubes (Fig. 2). In this case, the $NH_3$ gas will enter one tube from the right end of the duct while the other tube enters from the left.

The $NH_3$ gas always enters the tube going through the d diameter, x spaced holes (21).

A plug (30) blocks the end of each tube. The two series of holes of each tube (Fig. 3) are located so that a hole of one series is always in between two holes of the other series.

**Claims**

1. A process for removing $SO_3$ and $SO_2$ from combustion gases resulting from the combustion of sulphur-containing fuels, comprising the following steps:

(a) injecting ammonia into the combustion gases, the combustion gases having a temperature from 250°C to 600°C, preferably up to 400°C, the quantity of ammonia being sufficient to transform all the existing $SO_3$ and $SO_2$ into ammonium sulphate;

(b) cooling the resulting mixture to a temperature lower than 65°C to complete the reaction of $SO_2$ with ammonia in the presence of water vapor and oxygen thereby directly producing ammonium sulphate;

(c) passing the resulting mixture to a separation system for the removal and collection of submicron to low value micra ammonium sulphate particulates;

(d) releasing the desulphurized combustion gases to the atmosphere.

2. The process for removing $SO_3$ and $SO_2$ from combustion gases resulting from the combustion from sulphur-containing fuels, comprising the following steps:

(I) injecting ammonia into the combustion gases, the combustion gases having a temperature from 250°C to 600°C, preferably from 300°C to 400°C, the quantity of ammonia being sufficient to transform all the existing $SO_3$ into ammonium sulphate;

(II) cooling the resulting mixture to a temperature from 65°C to 250°C and injecting additional ammonia in a quantity sufficient to transform all the existing $SO_2$ into ammonium sulphate;

(III) cooling the resulting mixture to a temperature lower than 65°C to complete the reaction of $SO_2$ with ammonia in the presence of water vapor and oxygen thereby directly producing ammonium sulphate;

(IV) passing the resulting mixture to a separation system for the removal and collection of submicron to low value micra ammonium sulphate particulates;

(V) releasing the desulphurized combustion gases to the atmosphere.

3. A process according to claim 1 or 2, wherein cooling in step (b) of claim 1 or in step (III) of claim 2 is effected by spraying a solution of ammonium sulphate into the mixture.

4. A process according to any one of the claims 1 to 3, wherein the separation system includes absorbers with water, the resulting ammonium sulphate solution being separated.

5. A process according to any one of the claims 1 to 4, wherein ammonia is injected in the gaseous state.

6. A process according to claim 5, wherein the injection of ammonia is made by means of perforated tubes installed transversally to the gas stream.

**Patentansprüche**

1. Verfahren zum Entfernen von $SO_3$ und $SO_2$ aus Verbrennungsgasen, die auf die Verbrennung von Schwefel enthaltenden Brennstoffen zurückgehen, mit folgenden Maßnahmen:

(a) Einspritzen von Ammoniak in die Verbrennungsgase, wobei die Verbrennungsgase eine Temperatur von 250°C bis 600°C, vorzugsweise bis zu 400°C, aufweisen und die Ammoniakmenge ausreicht, um sämtliches vorliegendes $SO_3$ und $SO_2$ in Ammoniumsulfat zu überführen;

(b) Kühlen der erhaltenen Mischung auf eine Temperatur von weniger als 65°C, um die Reaktion von $SO_2$ mit Ammoniak in Gegenwart von Wasserdampf und Sauerstoff zu vervollständigen, wodurch direkt Ammoniumsulfat erzeugt wird;

(c) Überführen der erhaltenen Mischung in ein Abscheidungssystem zum Entfernen und Auffangen von Ammoniumsulfat in Form von submikroskopischen Teilchen bis zu Teilchen niedrigen Mikrowertes;

(d) Ablassen der entschwefelten Verbrennungsgase in die Atmosphäre:

2. Verfahren zum Entfernen von $SO_3$ und $SO_2$ aus Verbrennungsgasen, die auf die Verbrennung von Schwefel enthaltenden Brennstoffen zurückgehen, mit folgenden Maßnahmen:

(I) Einspritzen von Ammoniak in die Verbrennungsgase, wobei die Verbrennungsgase eine Temperatur von 250°C bis 600°C, vorzugsweise von 300°C bis 400°C, aufweisen und die Menge an Ammoniak ausreicht, um sämtliches vorliegendes $SO_3$ in Ammoniumsulfat zu überführen;

(II) Kühlen der erhaltenen Mischung auf eine Temperatur von 65°C bis 250°C und Einspritzen zusätzlichen Ammoniaks in einer ausreichenden Menge, um sämtliches vorliegendes $SO_2$ in Ammoniumsulfat zu überführen;

(III) Kühlen der erhaltenen Mischung auf eine Temperatur von weniger als 65°C, um die Reaktion von $SO_2$ mit Ammoniak in Gegenwart von Wasserdampf und Sauerstoff zu vervollständigen, wodurch direkt Ammoniumsulfat erzeugt wird;

(IV) Überführen der erhaltenen Mischung in ein Abscheidungssystem zum Entfernen und Auffangen von Ammoniumsulfat in Form von submikroskopischen Teilchen bis zu Teilchen mit niedrigem Mikrowert;

(V) Ablassen der entschwefelten Verbrennungsgase in die Atmosphäre.

3. Verfahren nach Anspruch 1 oder 2, dadurch gekennzeichnet, daß das Kühlen bei der Maßnahme (b) des Anspruchs 1 oder bei der Maßnahme (III) des Anspruchs 2 dadurch bewirkt wird, indem eine Ammoniumsulfatlösung in die Mischung gesprüht wird.

4. Verfahren nach irgendeinem der Ansprüche 1 bis 3, dadurch gekennzeichnet, daß das

Abscheidungssystem Absorber mit Wasser umfaßt, wobei die anfallende Ammoniumsulfatlösung abgetrennt wird.

5. Verfahren nach irgendeinem der Ansprüche 1 bis 4, dadurch gekennzeichnet, daß Ammoniak im gasförmigen Zustand eingespritzt wird.

6. Verfahren nach Anspruch 5, dadurch gekennzeichnet, daß das Einspritzen des Ammoniaks mittels perforierter Rohre, die schräg zum Gasstrom eingebaut sind, durchgeführt wird.

**Revendications**

1. Procédé pour l'élimination de $SO_3$ et $SO_2$ de gaz résultant de la combustion de combustibles contenant du soufre, comprenant les étapes suivantes qui consistent:

(a) à injecter de l'ammoniac dans les gaz de combustion, ces derniers se trouvant à une température allant de 250°C à 600°C, de préférence à 400°C, la quantité d'ammoniac étant suffisante pour transformer en sulfate d'ammonium la totalité existante de $SO_3$ et $SO_2$;

(b) à refroidir le mélange résultant à une température inférieure à 65°C pour accomplir la réaction de $SO_2$ avec l'ammoniac en présence de vapeur d'eau et d'oxygène de manière à produire directement du sulfate d'ammonium;

(c) à transférer le mélange résultant dans un dispositif de séparation en vue d'éliminer et de recueillir des particule de sulfate d'ammonium allant de moins d'un micromètre à quelques micromètres;

(d) à décharger dans l'atmosphère les gaz de combustion débarrassés du soufre.

2. Procédé pour éliminer $SO_3$ et $SO_2$ de gaz résultant de la combustion de combustibles contenant du soufre, comprenant les étapes suivantes qui consistent:

(I) à injecter de l'ammoniac dans les gaz de combustion, ces derniers se trouvant à une température allant de 250 à 600°C, de préférence de 300 à 400°C, la quantité d'ammoniac étant suffisante pour transformer la totalité du $SO_3$ existant en sulfate d'ammonium;

(II) à refroidir le mélange résultant à une température de 65°C à 250°C et à injecter un supplément d'ammoniac en quantité suffisante pour transformer la totalité du $SO_2$ existant en sulfate d'ammonium;

(III) à refroidir le mélange résultant à une température inférieure à 65°C pour accomplir la réaction de $SO_2$ avec l'ammoniac en présence de vapeur d'eau et d'oxygène, de manière à produire directement du sulfate d'ammonium;

(IV) à transférer le mélange résultant dans un dispositif de séparation pour éliminer et recueillir des particules de sulfate d'ammonium allant de moins d'un micromètre à quelques micromètres;

(V) à décharger dans l'atmosphère les gaz de combustion débarrassés du soufre.

3. Procédé suivant la revendication 1 ou 2, dans lequel le refroidissement dans l'étape (b) suivant la revendication 1 ou dans l'étape (III) suivant la revendication 2 est effectué par pulvérisation d'une solution de sulfate d'ammonium dans le mélange.

4. Procédé suivant l'une quelconque, des revendications 1 à 3, dans lequel le dispositif de séparation comprend des absorbeurs à eau, la solution résultante de sulfate d'ammonium étant séparée.

5. Procédé suivant l'une quelconque des revendications 1 à 4, dans lequel de l'ammoniac est injecté à l'état gazeux.

6. Procédé suivant la revendication 5, dans lequel l'injection d'ammoniac est effectuée au moyen de tubes perforés installés transversalement au courant de gaz.

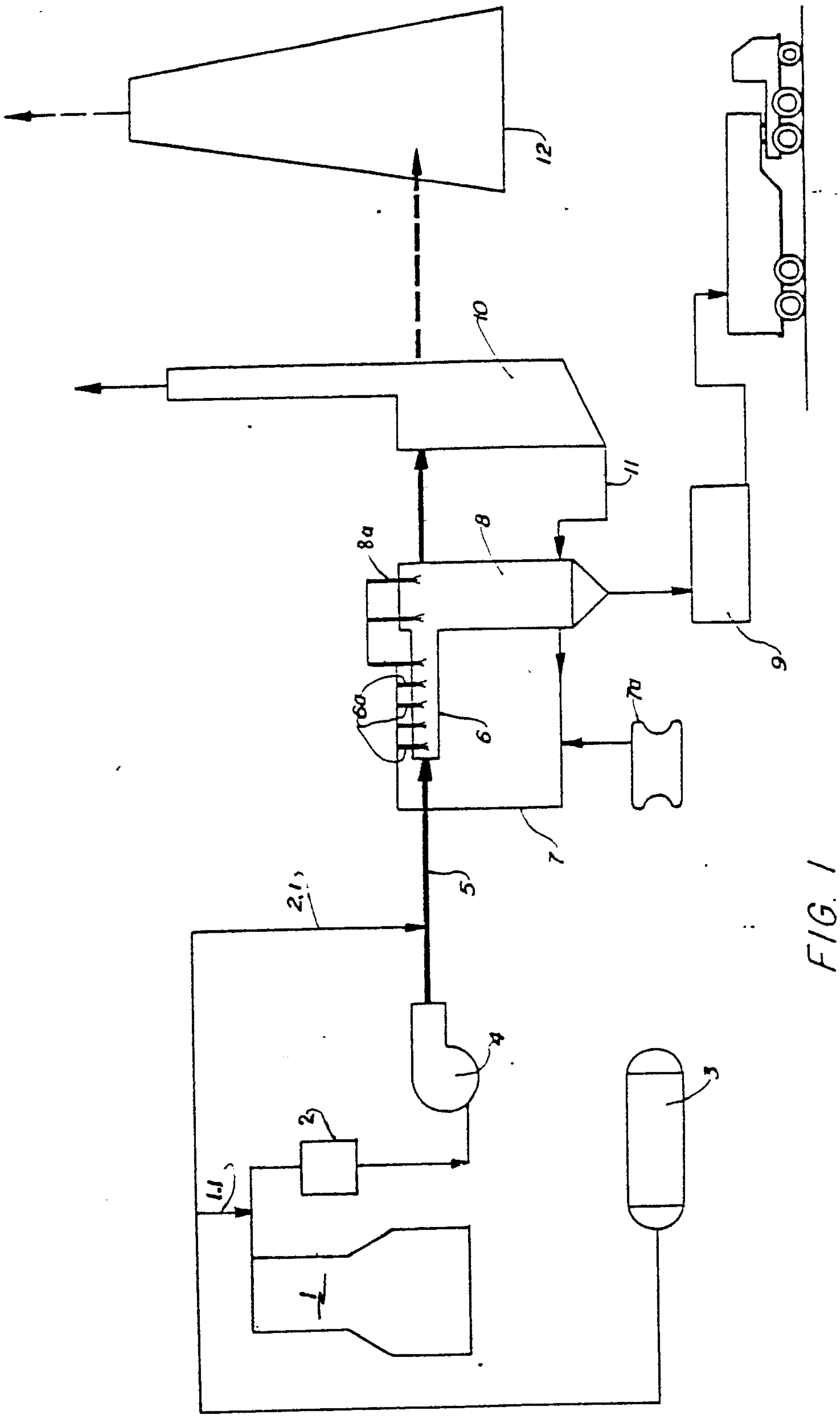


FIG. 1

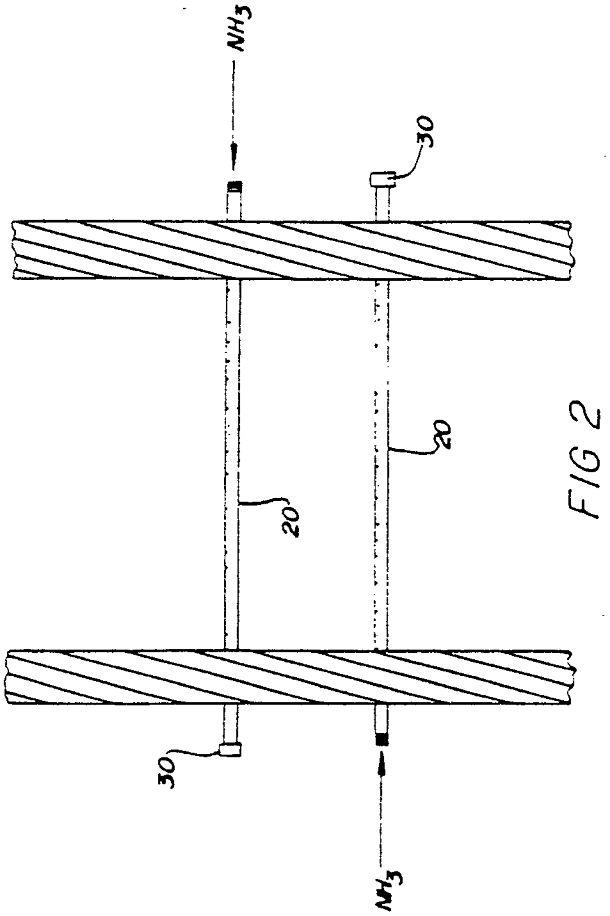


FIG 2

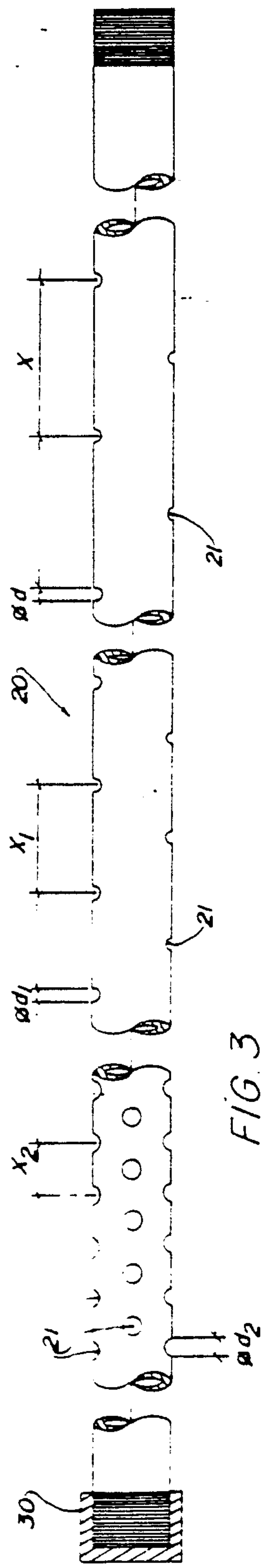


FIG 3